# EUROPÄISCHE PATENTSCHRIFT

(11) **EP 3 249 278 B1**
(45) Veröffentlichungstag und Bekanntmachung des Hinweises auf die Patenterteilung: **01.08.2018**
(21) Anmeldenummer: 17168560.5
(22) Anmeldetag: 27.04.2017
(51) Int. Cl.: F16L 55/128, F16L 55/134, B08B 9/043, B08B 9/047

(54) **SANIERUNGSEINHEIT FÜR DIE KANALROHRSANIERUNG MIT ABSPERRBLASE**
RENOVATION UNIT FOR THE RENOVATION OF PIPELINES WITH SEALING PLUG
UNITÉ D'ASSAINISSEMENT DE CANALISATION AYANT UN OBTURATEUR

(30) Priorität: 27.05.2016 DE 102016109842
(43) Veröffentlichungstag der Anmeldung: 29.11.2017
(73) Patentinhaber: IBAK Helmut Hunger GmbH & Co. KG, 24148 Kiel (DE)
(72) Erfinder: Stock, Markus, 24106 Kiel (DE)
(74) Vertreter: Lobemeier, Martin Landolf

(56) Entgegenhaltungen:
- DE-A1-102008 008 296
- DE-U1-202005 002 529
- FR-A1- 2 687 084
- US-A- 4 291 727

## Beschreibung

Die Erfindung betrifft eine Sanierungseinheit für die Kanalrohrsanierung mit einer ein zur Bearbeitung der Wandung eines Kanalrohrs eingerichtetes Werkzeug aufweisenden Einrichtung und einer der ersten Einrichtung benachbart angeordneten, mit dieser fest verbundenen Absperrblase.

Eine derartige Sanierungseinheit für die Kanalrohrsanierung findet sich bereits in Verwendung, wobei die dort vorgesehene Absperrblase allein die Aufgabe hat, mittels ihres gegen die Rohrwandung gerichteten Anpressdrucks ein Widerlager für das die Rohrwandung bearbeitende Werkzeug auszubilden.

Wenngleich sich der konstruktive Aufbau der bekannten Sanierungseinheit in der Praxis bewährt hat, ist der Vorgang der Sanierung an sich recht aufwändig: Das Werkzeug der Sanierungseinheit muss zunächst unter optischer Kontrolle am Ort seines Einsatzes positioniert und dort mittels der Absperrblase fixiert werden. Wird beispielsweise ein Fräswerkzeug verwendet, kommt es zu einem Abtrag der Rohrwandung, sodass das Fräswerkzeug funktionslos wird und in axialer Richtung nachgeführt werden muss. Hierzu ist es wiederum notwendig, die mittels der Absperrblase vorgenommene Fixierung zu lösen, das Werkzeug nachzuschieben und die Absperrblase erneut zu inflatieren.

Der Vorgang der Sanierung ist daher aufgrund jeweils mehrerer durchzuführender Schritte arbeits- und zeitaufwändig. Die DE 10 2008 008296 A1 offenbart eine fernsteuerbare Vorrichtung für Rohrinnenarbeiten mit einem Korpus, der am vorderen Ende einen Arbeitskopf tragen kann, am hinteren Ende einen Anschluss für eine Medienzuleitung aufweist und eine pneumatisch dichte, elastisch dehnbare Korpushülle besitzt. Der Korpus ist über seine Länge in mehrere druckdichte Sektionen aufgeteilt, die separat mit Druck beaufschlagbar sind. Die Korpushülle im Bereich der äußeren zwei Sektionen weitet sich bei Druckbeaufschlagung radial auf. Im Bereich der mittleren Sektion längt sich bei Druckbeaufschlagung die Korpushülle axial. Jede Sektion nimmt entlüftet wieder ihren Ausgangszustand ein.

Aufgabe der Erfindung ist es daher, eine Sanierungseinheit zu schaffen, die eine nur wenig arbeits- und zeitaufwändige Sanierung eines Kanalrohrs ermöglicht.

Diese Aufgabe wird erfindungsgemäß durch die Sanierungseinheit mit den Merkmalen von Anspruch 1 gelöst. Die Unteransprüche geben vorteilhafte Ausgestaltungen der Erfindung wieder.

Der Grundgedanke der Erfindung ist es, die durch Befüllung bzw. Entleerung der Absperrblase bewirkte axiale Ausdehnungsänderung der Absperrblase für einen Vortrieb oder eine Retraktion des Werkzeugs zu nutzen. Dieses Vorgehen ermöglicht insbesondere die Ausbildung eines Widerlagers durch radiale Ausdehnung der Absperrblase und gleichzeitig eine Positionsänderung des Werkzeugs in axialer Richtung, ohne dass die Fixierung der Absperrblase an der Rohrinnenwandung gelöst werden muss. Damit ist - gegenüber den aus dem Stand der Technik bekannten Vorrichtungen - ein kontrolliertes Fräsen auch in axialer Richtung möglich.

Erfindungsgemäß wird also eine Sanierungseinheit für die Kanalrohrsanierung beansprucht mit einer ein zur Bearbeitung der Wandung eines Kanalrohrs eingerichtetes Werkzeug aufweisenden Einrichtung, einer der ersten Einrichtung benachbart angeordneten, mit dieser fest verbundenen Absperrblase, die während des Befüllens mit einem Fluid zur Ausdehnung in radialer und in axialer Richtung eingerichtet ist, und einer Steuerung zum Vorschub und/oder zur Retraktion der das Werkzeug aufweisenden Einrichtung aufgrund der Änderung der Ausdehnung der Absperrblase in axialer Richtung durch deren Befüllen oder Entleeren.

Bevorzugt ist die Steuerung zum Vorschub und/oder zur Retraktion der das Werkzeug aufweisenden Einrichtung wenigstens bei maximal erreichter radialer Ausdehnung der Absperrblase eingerichtet, nämlich dann, wenn die Absperrblase der Rohrinnenwandung anliegt.

Nach einer weiteren bevorzugten Ausgestaltung ist die Absperrblase zum Befüllen mit Luft eingerichtet. Alternativ kann die Absperrblase zum Befüllen mit Wasser eingerichtet sein.

Speziell ist die Absperrblase jedoch als eine zwei Halbschalen aufweisende bogengängige Absperrblase ausgebildet.

Das Werkzeug ist speziell als Fräswerkzeug ausgebildet, wobei die Einrichtung besonders bevorzugt ein Fräsroboter ist.

Schließlich ist die Sanierungseinheit nach einer weiteren bevorzugten Ausgestaltung mit einem Schiebestab verbunden.

Die Erfindung wird im Folgenden anhand eines in der beigefügten Abbildung dargestellten, besonders bevorzugt ausgestalteten Ausführungsbeispiels näher erläutert.

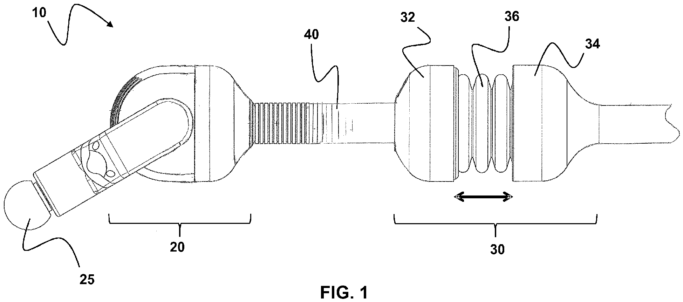

Fig. 1 zeigt eine schematische Seitenansicht eines besonders bevorzugt ausgestalteten Ausführungsbeispiels nach der Erfindung.

Die dargestellte, bevorzugt ausgestaltete Sanierungseinheit 10 für die Kanalrohrsanierung besitzt eine an ihrem vorderen Ende (in der Abbildung links) angeordnete Einrichtung 20, die ein zur Bearbeitung der Wandung eines Kanalrohrs eingerichtetes Werkzeug 25, im vorliegenden Fall einen Fräskopf 25, aufweist. Das Werkzeug 25 ist an einem mit der Einrichtung 20 schwenkbar verbundenen Arm angeordnet, sodass bei entsprechender Ausrichtung der Einrichtung 20 im Rohr eine beliebige Stelle der Rohrinnenwandung mit dem Werkzeug 25 bearbeitet werden kann.

Diese Einrichtung 20 ist fest mit einer der Einrichtung 20 benachbart angeordneten Absperrblase 30 verbunden. Insbesondere kann zwischen der Einrichtung 20 und der Absperrblase 30 ein nicht längenveränderbares Distanzelement 40 vorgesehen sein. Die Absperrblase 30 ist so eingerichtet, dass diese während des Befüllens mit einem Fluid eine Ausdehnung in radialer und in axialer Richtung erfährt.

Die Ausdehnung in radialer Richtung führt dazu, dass die Absperrblase 30 das Kanalrohr hinter der Einrichtung 20 dichtend absperrt und ein Widerlager für das an der Einrichtung 20 angeordnete Werkzeug 25 während dessen Bearbeitung der Rohrwandung bietet.

Die Ausdehnung in axialer Richtung der Absperrblase 30 hingegen führt dazu, dass die fest mit der Absperrblase 30 verbundene Einrichtung 20 vorgetrieben wird.

Damit die Absperrblase 30 bogengängig ist, ist eine Ausgestaltung wie in der DE 10 2005 048 145 B3 beschrieben vorgesehen. Dabei weist die Absperrblase 30 zwei Halbschalen 32, 34 auf, zwischen denen ein mit einem Fluid befüllbarer Balg 36 vorgesehen ist, wobei die Halbschalen 32, 34 im entleerten Zustand des Balgs 36 ein geschlossenes, bevorzugt kugelförmiges Gehäuse ausbilden und sich beim Befüllen des Balgs 36 voneinander entfernen.

Der Umstand, dass beim Auseinanderdriften der Halbschalen 32, 34 auch die das Werkzeug tragende Einrichtung 20 vorgetrieben wird, wird sich nun dadurch zunutze gemacht, dass eine Steuerung zum Vorschub und/oder zur Retraktion der das Werkzeug 25 aufweisenden Einrichtung 20 vorgesehen ist, die durch Steuerung der Ausdehnung der Absperrblase 30 bzw. des Balgs 36 in axialer Richtung durch Befüllen oder Entleeren erfolgt.

Insbesondere wenn die maximale radiale Ausdehnung des Balgs 36 der Absperrblase 30 erreicht ist, wirkt sich eine Änderung der Befüllung der Absperrblase 30 unmittelbar auf die axiale Ausdehnung der Absperrblase 30 und damit auf die axiale Position des Werkzeugs 25 aus.

So wird beispielsweise bei Verwendung eines Fräswerkzeugs 25 ein Materialabtrag des Rohrs erfolgen, sodass das Fräswerkzeug 25 neu positioniert, nämlich nachgeschoben werden muss. Dieses kann jetzt dadurch erfolgen, dass die Absperrblase 35 über den Ist-Zustand hinaus befüllt wird und selbst eine Ausdehnung erfährt. Weil nun die Einrichtung 20 mit der Absperrblase 30 fest verbunden ist, führt die Ausdehnung der Absperrblase 30 zu einer Verschiebung der Einrichtung 20 in axialer Richtung und damit zu einem Vortrieb des Werkzeugs 25.

Ebenso kann eine Neupositionierung des Werkzeugs 25 durch Retraktion der Einrichtung 20 dadurch erfolgen, dass eine befüllte Absperrblase 30 entleert und dadurch deren axiale Ausdehnung minimiert wird.

Entsprechend wird also ein Verfahren vorgeschlagen, bei dem das Werkzeug einer mittels einer Absperrblase positionierten Sanierungseinheit durch Befüllen oder Entleeren der Absperrblase vorgeschoben oder zurückgezogen wird, wobei die Absperrblase dichtend am Kanalrohr anliegt.

## Patentansprüche

1. Sanierungseinheit (10) für die Kanalrohrsanierung mit
- einer ein zur Bearbeitung der Wandung eines Kanalrohrs eingerichtetes Werkzeug (25) aufweisenden Einrichtung (20),
- einer der ersten Einrichtung (20) benachbart angeordneten, mit dieser fest verbundenen Absperrblase (30), die während des Befüllens mit einem Fluid zur Ausdehnung in radialer und in axialer Richtung eingerichtet ist, und
- einer Steuerung zum Vorschub und/oder zur Retraktion der das Werkzeug (25) aufweisenden Einrichtung (20) aufgrund der Änderung der Ausdehnung der Absperrblase (30) in axialer Richtung durch deren Befüllen oder Entleeren.

2. Sanierungseinheit (10) nach Anspruch 1, **dadurch gekennzeichnet, dass** die Steuerung zum Vorschub und/oder zur Retraktion der das Werkzeug (25) aufweisenden Einrichtung (20) wenigstens bei maximal erreichter radialer Ausdehnung der Absperrblase (30) eingerichtet ist.

3. Sanierungseinheit (10) nach einem der vorhergehenden Ansprüche, **dadurch gekennzeichnet, dass** die Absperrblase (30) zum Befüllen mit Luft eingerichtet ist.

4. Sanierungseinheit (10) nach einem der vorhergehenden Ansprüche, **dadurch gekennzeichnet, dass** die Absperrblase (30) eine zwei Halbschalen aufweisende bogengängige Absperrblase (30) ist.

5. Sanierungseinheit (10) nach einem der vorhergehenden Ansprüche, **dadurch gekennzeichnet, dass** das Werkzeug (25) ein Fräswerkzeug (25) ist.

6. Sanierungseinheit (10) nach einem der vorhergehenden Ansprüche, **dadurch gekennzeichnet, dass** die Sanierungseinheit (10) mit einem Schiebestab verbunden ist.

7. Sanierungseinheit (10) nach einem der vorhergehenden Ansprüche, **dadurch gekennzeichnet, dass** die Einrichtung (20) ein Fräsroboter ist.

## Claims

1. Renovation unit (10) for renovating sewer pipes, said unit comprising
- a device (20) comprising a tool (25) designed for working on the wall of a sewer pipe,
- a shut-off bladder (30) which is arranged adjacently to the first device (20), is rigidly connected thereto, and is designed to radially and axially expand when filled with a fluid, and
- a controller for pushing forward and/or retracting the device (20) comprising the tool (25) depending on the change to the expansion of the shut-off bladder (30) in the axial direction as a result of said shut-off bladder being filled or emptied.

2. Renovation unit (10) according to claim 1, **characterized in that** the controller is designed to push forward and/or retract the device (20) comprising the tool (25) at least when the shut-off bladder (30) has been radially expanded to a maximum.

3. Renovation unit (10) according to any of the preceding claims, **characterized in that** the shut-off bladder (30) is designed to be filled with air.

4. Renovation unit (10) according to any of the preceding claims, **characterized in that** the shut-off bladder (30) is a shut-off bladder (30) capable of negotiating bends and comprising two half-shells.

5. Renovation unit (10) according to any of the preceding claims, **characterized in that** the tool (25) is a milling tool (25).

6. Renovation unit (10) according to any of the preceding claims, **characterized in that** the renovation unit (10) is connected to a sliding rod.

7. Renovation unit (10) according to any of the preceding claims, **characterized in that** the device (20) is a milling robot.

## Revendications

1. Unité de rénovation (10) pour la rénovation de canalisations, comprenant
- un dispositif (20) comprenant un outil (25) conçu pour l'usinage de la paroi d'une canalisation,
- un élément d'obturation gonflable (30) disposé de manière adjacente au premier dispositif (20) et relié solidement à celui-ci, lequel élément d'obturation gonflable est conçu pour se dilater dans la direction radiale et dans la direction axiale pendant le remplissage avec un fluide, et
- une commande servant à l'avance et/ou au retrait du dispositif (20) comprenant l'outil (25) en raison de la variation de la dilatation de l'élément d'obturation gonflable (30) dans la direction axiale au moyen de son remplissage ou de son vidage.

2. Unité de rénovation (10) selon la revendication 1, **caractérisée en ce que** la commande est conçue pour l'avance et/ou le retrait du dispositif (20) comprenant l'outil (25) au moins en cas de dilatation radiale maximale atteinte de l'élément d'obturation gonflable (30).

3. Unité de rénovation (10) selon l'une des revendications précédentes, **caractérisée en ce que** l'élément d'obturation gonflable (30) est conçu pour être rempli d'air.

4. Unité de rénovation (10) selon l'une des revendications précédentes, **caractérisée en ce que** l'élément d'obturation gonflable (30) est un élément d'obturation gonflable (30) comportant deux demi-coques et adapté au passage de coudes.

5. Unité de rénovation (10) selon l'une des revendications précédentes, **caractérisée en ce que** l'outil (25) est un outil de fraisage (25).

6. Unité de rénovation (10) selon l'une des revendications précédentes, **caractérisée en ce que** l'unité de rénovation (10) est reliée à une tige coulissante.

7. Unité de rénovation (10) selon l'une des revendications précédentes, **caractérisée en ce que** le dispositif (20) est un robot de fraisage.
